# EUROPEAN PATENT APPLICATION

(11) **EP 4 205 555 A1**
(43) Date of publication of application: **05.07.2023**
(21) Application number: 21862046.6
(22) Date of filing: 25.08.2021
(51) Int. Cl.: A23L 2/38, A23L 2/52, A23L 29/20, A23L 29/00, A23L 29/269

(54) **BEVERAGE COMPOSITION CONTAINING CHLORELLA FREE OF CHLOROPHYLL AND PREPARATION METHOD THEREFOR**

(30) Priority: 28.08.2020 KR 20200108948
(71) Applicant: Daesang Corporation, Seoul 02586 (KR)
(72) Inventor: KIM, Bo-Ra, Yongin-si Gyeonggi-do 17003 (KR); HWANG, Ji-Eun, Goyang-si Gyeonggi-do 10360 (KR); JEON, Jin-Young, Seongnam-si Gyeonggi-do 13589 (KR)
(74) Representative: Turner, Craig Robert
(86) International application number: PCT/KR2021/011326
(87) International publication number: WO 2022/045749

(57) **Abstract**

The present invention provides a beverage composition comprising: chlorophyll-deficient chlorella; a specific gum as a stabilizer; and an aqueous liquid medium and a process for preparing the same. The beverage composition according to the present invention not only exhibits excellent dispersion stability without precipitation, but can also prevent the browning phenomenon occurring in a sterilization process.

## Description

### TECHNICAL FIELD

The present invention relates to a beverage composition containing chlorophyll-deficient chlorella and a process for preparing the same. More specifically, the present invention relates to a beverage composition comprising chlorophyll-deficient chlorella; a specific gum as a stabilizer; and an aqueous liquid medium and a process for preparing the same.

### BACKGROUND ART

Chlorella, which is one of the freshwater green microalgaes, contains nutrients such as carbohydrates, proteins, fats, as well as chlorophyll, vitamins, minerals, and the like, which are beneficial to the human body. Thus, chlorella is known as a raw material for foods with excellent nutritional value and has been selected even as a space food. In addition, chlorella, which is widely used as a raw material for health functional foods, not only has a high antioxidant effect, but can also help improve skin health, immune function, and blood cholesterol. Chlorella is cultured by autotrophic culture, heterotrophic culture, or a combination thereof and may be cultured in a medium containing a carbon source, a nitrogen source, a trace metal, a trace element, and the like.

Green chlorella containing chlorophyll is unstable to pH and/or heat and thus has a characteristic that is easily changed into brown color. Especially, since it is easily precipitated in an aqueous liquid medium, it is difficult to prepare in the form of a beverage or the like. The brown component is pheophytin, which is generated through the substitution of the magnesium ion (Mg²⁺) located at the center of the porphyrin ring in the chlorophyll structure by hydrogen ions. In order to solve the problem due to the discoloration of green chlorella containing chlorophyll, Japanese Patent No. 4032072 has disclosed a composition for a greenish beverage obtained by blending a plant tissue containing chlorophyll as a greenish beverage component and copper gluconate and gellan gum or a fermented cellulose stabilizer as a stabilizer. However, the use of a stabilizer including copper gluconate causes the problem of requiring an additional process. In addition, the present applicant has disclosed a process for preparing a beverage comprising a raw material of chlorella and functional ingredients by using a combination of agar and a gum as a stabilizer (Korean Laid-Open Patent Publication No. 10-2011-0011036). However, when agar is used as one of the stabilizers, precipitation may occur at 30°C or less.

Furthermore, beverage compositions obtained according to the prior art, such as Japanese Patent No. 4032072 and Korean Laid-Open Patent Publication No. 10-2011-0011036, comprise a chlorophyll-containing chlorella. However, when preparing a beverage composition comprising the chlorophyll-containing chlorella in an aqueous liquid medium such as water or milk, the strong green color of chlorophyll greatly changes the color of the beverage composition, which causes feel repulsion to consumers.

### DISCLOSURE

### Technical Problem

The present inventors have carried out various studies to develop a beverage composition containing chlorophyll-deficient chlorella, instead of the chlorophyll-containing chlorella that may cause feel repulsion to consumers due to browning. Especially, various studies were carried out to develop a chlorella-containing beverage composition capable of preventing precipitation of chlorophyll-deficient chlorella as well as preventing the browning problems during retort processing accompanied by heating and sterilization. As the results thereof, the present inventors have found that, when chlorophyll-deficient chlorella is processed into the form of a beverage composition by using only a specific gum as a stabilizer, it is possible to effectively prevent precipitation, thereby exhibiting excellent dispersion stability and to effectively prevent the browning phenomenon occurring during heat treatment for sterilization.

Therefore, it is an object of the present invention to provide a beverage composition comprising chlorophyll-deficient chlorella and a specific gum as a stabilizer.

It is another object of the present invention to provide a process for preparing said beverage composition.

### Technical Solution

In accordance with an aspect of the present invention, there is provided a beverage composition comprising chlorophyll-deficient chlorella; xanthan gum, tara gum, or a mixture of xanthan gum and tara gum as a stabilizer; and an aqueous liquid medium.

In accordance with another aspect of the present invention, there is provided a process for preparing a beverage composition comprising: (a) adding chlorophyll-deficient chlorella; and xanthan gum, tara gum, or a mixture of xanthan gum and tara gum as a stabilizer to an aqueous liquid medium, followed by homogenizing the resulting mixture to prepare a dispersion, and (b) sterilizing the dispersion obtained in Step (a).

### ADVANTAGEOUS EFFECTS

The beverage composition according to the present invention contains chlorophyll-deficient chlorella. Therefore, since the color change of the beverage composition can be minimized, it is possible to prepare in the form of various beverage compositions and to relieve feel repulsion according to the color change of beverage compositions due to the strong green chlorophyll. In addition, the beverage composition according to the present invention not only exhibits excellent dispersion stability without precipitation through using a specific gum, but also prevents the browning phenomenon occurring in a sterilization process (e.g., retort) through using chlorophyll-deficient chlorella.

### DESCRIPTION OF DRAWINGS

FIG. 1 shows the results obtained by evaluating the occurrence of precipitation and discoloration after storing the beverage compositions prepared using purified water as an aqueous liquid medium and various gums at room temperature (about 25°C) for 1 week.
FIG. 2 shows the results obtained by evaluating the occurrence of precipitation and discoloration after storing the beverage compositions prepared using milk as an aqueous liquid medium and various gums under a refrigeration condition (about 4°C) for 1 week.
FIG.3 shows the results obtained by evaluating the dispersion stability of the beverage composition (the beverage composition of Example 1-1) obtained according to the present invention using Turbiscan.

### BEST MODE

The present invention provides a beverage composition comprising chlorophyll-deficient chlorella; xanthan gum, tara gum, or a mixture of xanthan gum and tara gum as a stabilizer; and an aqueous liquid medium.

As the chlorophyll-deficient chlorella, a powder obtained by drying a biomass obtained through culturing a chlorophyll-deficient chlorella strain may be preferably used.

The chlorophyll-deficient chlorella strain may be a known genus *Chlorella* sp. Strain, for example, a *Chlorella protothecoides* species, which is cultured in a yellow colony form. Preferably, the chlorophyll-deficient chlorella strain may be a *Chlorella protothecoides* species obtained through heterotrophic culture, with a sugar, in the absence of light. In an embodiment, the chlorophyll-deficient chlorella strain may be a strain obtained through heterotrophic culture of *Chlorella protothecoides* DS-NCRC7 (KCTC 18633P) (Korean Patent No. 10-2026681) having high crude-protein productivity which was developed by the present inventors, with a sugar, in the absence of light. The culture may be carried out according to conventional culture methods of a *Chlorella* strain, e.g., the culture methods disclosed in Korean Patent No. 10-2026681. For example, the culture may be carried out in a medium containing glucose as a sugar source, phosphates (KH₂PO₄, K₂HPO₄, etc.), metal salts (MgSO₄, ZnSO₄, CuSO₄, FeSO₄, NaMoO₄, MnCl₂, etc.), boric acid, etc. in water (e.g., purified water, etc.). And, if necessary, the medium may further include an antifoaming agent or the like. The culture in the medium described above may be carried out according to conventional culture methods, for example, according to aseptic and heterotrophic fed-batch culture (e.g., using glucose as a sugar source) in a sterile tank, under 0.3∼1.0 vvm of air, 200-500 rpm of agitation, and pH 6.5∼7.5.

The powder obtained by drying a biomass obtained through culturing a chlorophyll-deficient chlorella strain (also referred to herein as 'a raw chlorella powder' or 'chlorella powder') may be obtained, for example through biomass recovery and drying such as spray drying according to conventional methods after culturing the strain such as a *Chlorella protothecoides* species. For example, after recovering a biomass from the culture solution of *Chlorella protothecoides* by centrifugation or the like, it may be prepared by drying the biomass by a conventional method (if necessary, e.g., by spray drying methods). Preferably, the chlorophyll-deficient chlorella may comprise at least 45 % by weight of microalgae proteins based on a dry weight.

In the beverage composition of the present invention, the chlorophyll-deficient chlorella may be present in an amount of 0.5-5 % by weight, preferably 0.5-2 % by weight, more preferably about 0.8 % by weight, based on the total weight of the composition.

The beverage composition of the present invention contains xanthan gum, tara gum, or a mixture of xanthan gum and tara gum as a stabilizer, which makes it possible to exhibit excellent dispersion stability without precipitation and to prevent the browning phenomenon occurring in a sterilization process (e.g., retort). Preferably, the stabilizer does not comprise agar. The stabilizer may be preferably xanthan gum or a mixture of xanthan gum and tara gum, more preferably a mixture of xanthan gum and tara gum. The stabilizer may be present in an amount of 0.1~0.3 % by weight, preferably 0.15∼0.25 % by weight, more preferably about 0.2 % by weight, based on the total weight of the composition. In the case of containing a mixture of xanthan gum and tara gum as a stabilizer, the weight ratio of xanthan gum and tara gum may be preferably in the range of 7-9 : 3-1, more preferably about 7 : 3.

The beverage composition of the present invention comprises an aqueous liquid medium. The aqueous liquid medium includes, without limitation, various aqueous liquids that may be used as beverage compositions. In an embodiment, the aqueous liquid medium may be water, milk, or soymilk.

The present invention also provides a process for preparing the beverage composition. Specifically, the present invention provides a process for preparing a beverage composition comprising: (a) adding chlorophyll-deficient chlorella; and xanthan gum, tara gum, or a mixture of xanthan gum and tara gum as a stabilizer to an aqueous liquid medium, followed by homogenizing the resulting mixture to prepare a dispersion, and (b) sterilizing the dispersion obtained in Step (a).

In the process of the present invention, the chlorophyll-deficient chlorella, the stabilizer, and the aqueous liquid medium are as described in connection with the beverage composition of the present invention. In an embodiment, the aqueous liquid medium of Step (a) may be purified water heated to 90∼100°C and the sterilization of Step (b) may be carried out by sterilizing at 125°C for 15 minutes. In another embodiment, the aqueous liquid medium of Step (a) may be milk or soymilk heated to 65~80°C and the sterilization of Step (b) may be carried out under a UHT (Ultra-High Temperature) condition, i.e., by sterilizing at 135~142°C for 3-30 seconds.

The present invention will be described in further detail with reference to the following examples and experimental examples. These examples and experimental examples are for illustrative purposes only and are not intended to limit the scope of the present invention.

According to the method disclosed in Korean Patent No. 10-2026681, *Chlorella protothecoides* DS-NCRC7 (KCTC 18633P) was cultured in a 5L Jar fermenter, followed by centrifuging at 3000 rpm to recover a biomass, which was then dried to obtain a powder. The obtained powder was used as 'a raw chlorella powder' in the following Examples.

### Example 1

Beverage compositions were prepared according to the components and amounts of the following table 1. The content of each component in Table 1 means % by weight. Specifically, the raw chlorella powder and the gum(s) were added to purified water heated to 95°C and then homogenized under a pressure of 200 bar. The resulting dispersion was sterilized in an autoclave at 125°C for 15 minutes to prepare each beverage composition. All of the obtained beverage compositions exhibited a yellow color.

**Table 1**

| | | Example (% by weight) | | | | | |
|---|---|---|---|---|---|---|---|
| | | 1-1 | 1-2 | 1-3 | 1-4 | 1-5 | 1-6 |
| Stabilizer | Xanthan gum | 0.14 | 0.2 | - | - | - | - |
| | Tara gum | 0.06 | - | 0.2 | - | - | - |
| | Gellan gum | - | - | - | 0.2 | - | - |
| | Guar gum | - | - | - | - | 0.2 | - |
| | Carrageenan | - | - | - | - | - | 0.2 |
| Raw chlorella powder | | 0.8 | 0.8 | 0.8 | 0.8 | 0.8 | 0.8 |
| Purified water | | 99.0 | 99.0 | 99.0 | 99.0 | 99.0 | 99.0 |

### Example 2

Beverage compositions were prepared according to the components and amounts of the following table 2. The content of each component in Table 2 means % by weight. Specifically, the raw chlorella powder and the gum(s) were added to milk heated to about 65°C and then homogenized under a pressure of 200 bar. The resulting dispersion was sterilized at about 140°C for about 30 seconds to prepare each beverage composition. All of the obtained beverage compositions exhibited a pale yellow color.

**Table 2**

| | | Example (% by weight) | | | | |
|---|---|---|---|---|---|---|
| | | 2-1 | 2-2 | 2-3 | 2-4 | 2-5 |
| Stabilizer | Xanthan gum | 0.14 | 0.2 | - | - | - |
| | Tara gum | 0.06 | - | 0.2 | - | - |
| | Gellan gum | - | - | - | 0.2 | - |
| | Guar gum | - | - | - | - | 0.2 |
| Raw chlorella powder | | 0.8 | 0.8 | 0.8 | 0.8 | 0.8 |
| Milk | | 99.0 | 99.0 | 99.0 | 99.0 | 99.0 |

### Experimental Example 1: Evaluation of Dispersion Stability

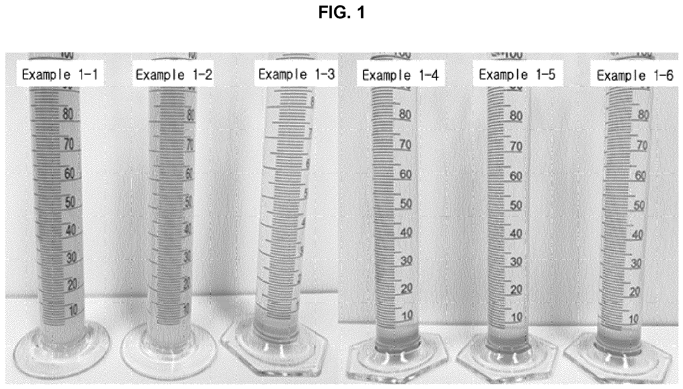

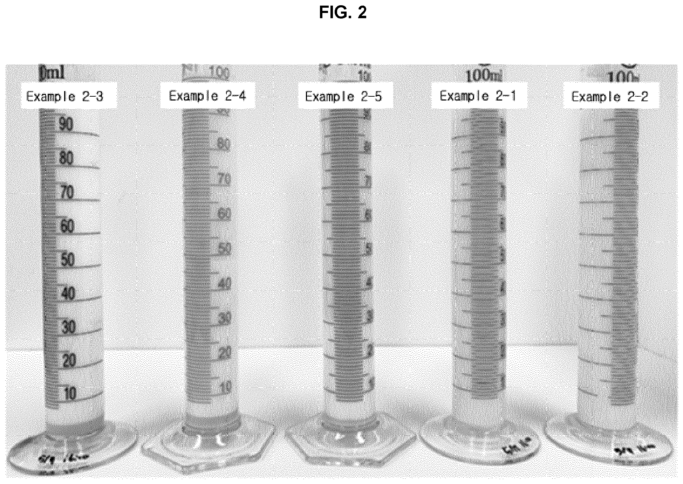

After storing the beverage compositions obtained in Examples 1 and 2 at room temperature (about 25°C) and at a refrigeration condition (about 4°C) for 1 week, the dispersion stability was evaluated by measuring whether or not precipitation occurs. The evaluation criteria for precipitation are as follows: when each beverage composition is placed in a 100 mL measuring cylinder, "no change" in case that there is precipitation within 1 mm from the bottom thereof, 'slight precipitation' when there is precipitation in more than 1 mm and 3 mm or less from the bottom thereof, and 'precipitation' when there is precipitation in more than 3 mm from the bottom thereof. The results of evaluating the dispersion stability as described above are shown in FIGs. 1 and 2, and summarized in the following table 3.

**Table 3**

| | Whether or not precipitation occurs |
|---|---|
| Example 1-1 | No change |
| Example 1-2 | No change |
| Example 1-3 | Precipitation |
| Example 1-4 | Precipitation |
| Example 1-5 | Precipitation |
| Example 1-6 | Precipitation |
| Example 2-1 | No change |
| Example 2-2 | No change |
| Example 2-3 | Precipitation |
| Example 2-4 | Precipitation |
| Example 2-5 | Precipitation |

As can be seen from the above results, in the case of containing xanthan gum or the combination of xanthan gum and tara gum as a stabilizer according to the present invention, excellent dispersion stability was exhibited without occurrence of precipitation.

### Experimental Example 2: Evaluation of Dispersion Stability using Turbiscan

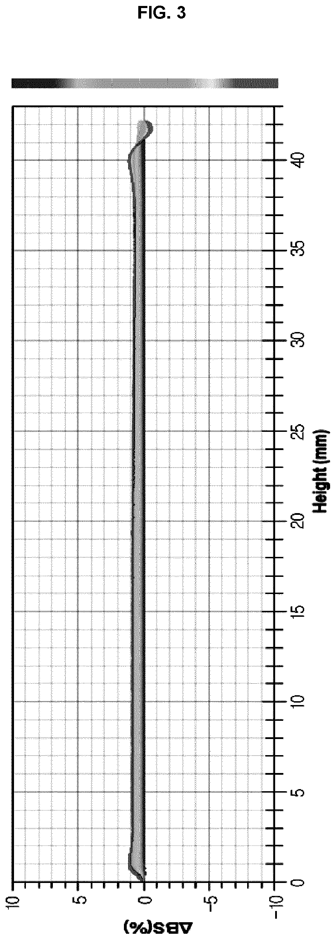

Turbiscan is an optical analyzer for analyzing physicochemical properties of a solution through using the transmission and backscattering light intensities generated from a light source. Turbiscan emits lights at an interval of 40 µm from a glass cylindrical vial of 70 mm height containing a sample and collects the changes in transmission or backscattering light intensity, thereby being able to observe the changes in state or particle size of the sample over time. The beverage composition prepared in Example 1-1, which showed excellent dispersion stability in the naked eye, was injected into the cylindrical vial to be 50 mm and then mounted on a Turbiscan. The transmission and backscattering light intensities were measured at 25°C every 12 hours, using a near-infrared light source (λ = 880 nm), for one week. At this time, transmission and backscattering light intensities (%) were simultaneously measured according to the dispersion states of the sample, that is, the particle sizes (i.e., the dispersed phase) and the concentrations of the dispersed phase/continuous phase. The results of performing the analyses as described above are shown in FIG. 3. If the sample is a stable sample, the initial dispersion state is maintained so that the profiles measured at every scan are overlapped and there is no change in the backscattering profiles. If the sample is a sample whose dispersion stability is impaired, the profile deviates from the initial profile over time. From the results of FIG. 3, it can be confirmed that all the profiles measured at each scan become to be overlapped according to the measurement time, in a stable form without precipitation of chlorella; and that the initial dispersion state is maintained showing no change in the backscattering profiles, thereby exhibiting excellent dispersion stability.

## Claims

1. A beverage composition comprising chlorophyll-deficient chlorella; xanthan gum, tara gum, or a mixture of xanthan gum and tara gum as a stabilizer; and an aqueous liquid medium.

2. The beverage composition according to claim 1, wherein the chlorophyll-deficient chlorella is a powder obtained by drying a biomass obtained through culturing a chlorophyll-deficient chlorella strain.

3. The beverage composition according to claim 2, wherein the chlorophyll-deficient chlorella strain is a *Chlorella protothecoides* species.

4. The beverage composition according to claim 2, wherein the chlorophyll-deficient chlorella strain is a *Chlorella protothecoides* species obtained through heterotrophic culture, with a sugar, in the absence of light.

5. The beverage composition according to claim 1, wherein the chlorophyll-deficient chlorella comprises at least 45 % by weight of microalgae proteins based on a dry weight.

6. The beverage composition according to claim 1, wherein the chlorophyll-deficient chlorella is present in an amount of 0.5-5 % by weight based on the total weight of the composition.

7. The beverage composition according to claim 1, wherein the stabilizer does not comprise agar.

8. The beverage composition according to claim 1, wherein the stabilizer is xanthan gum or a mixture of xanthan gum and tara gum.

9. The beverage composition according to claim 1, wherein the stabilizer is present in an amount of 0.1~0.3 % by weight based on the total weight of the composition.

10. The beverage composition according to claim 1, wherein the stabilizer a mixture of xanthan gum and tara gum and a weight ratio of xanthan gum and tara gum is in the range of 7-9 : 3-1.

11. The beverage composition according to any one of claims 1 to 10, wherein the aqueous liquid medium is water, milk or soymilk.

12. A process for preparing a beverage composition comprising:
(a) adding chlorophyll-deficient chlorella; and xanthan gum, tara gum, or a mixture of xanthan gum and tara gum as a stabilizer to an aqueous liquid medium, followed by homogenizing the resulting mixture to prepare a dispersion, and
(b) sterilizing the dispersion obtained in Step (a).

13. The process according to claim 12, wherein the chlorophyll-deficient chlorella is a powder obtained by drying a biomass obtained through culturing a chlorophyll-deficient chlorella strain.

14. The process according to claim 13, wherein the chlorophyll-deficient chlorella strain is a *Chlorella protothecoides* species.

15. The process according to claim 13, wherein the chlorophyll-deficient chlorella strain is a *Chlorella protothecoides* species obtained through heterotrophic culture, with a sugar, in the absence of light.

16. The process according to claim 12, wherein the chlorophyll-deficient chlorella comprises at least 45 % by weight of microalgae protein based on a dry weight.

17. The process according to claim 12, wherein the chlorophyll-deficient chlorella is used in an amount of 0.5-5 % by weight based on the total weight of the composition.

18. The process according to claim 12, wherein the stabilizer does not comprise agar.

19. The process according to claim 12, wherein the stabilizer is xanthan gum or a mixture of xanthan gum and tara gum.

20. The process according to claim 12, wherein the stabilizer is used in an amount of 0.1~0.3 % by weight based on the total weight of the composition.

21. The process according to claim 12, wherein the stabilizer a mixture of xanthan gum and tara gum and a weight ratio of xanthan gum and tara gum is in the range of 7-9 : 3-1.

22. The process according to claim 12, wherein the aqueous liquid medium in Step (a) is purified water heated to 90∼100°C.

23. The process according to claim 21, wherein the sterilization of Step (b) is carried out by sterilizing at 125°C for 15 minutes.

24. The process according to claim 12, wherein the aqueous liquid medium in Step (a) is milk or soymilk heated to 65~80°C.

25. The process according to claim 24, wherein the sterilization of Step (b) is carried out by sterilizing at 135~142°C for 3-30 seconds.
